# EUROPEAN PATENT APPLICATION

(11) **EP 1 717 913 A2**
(43) Date of publication of application: **02.11.2006**
(21) Application number: 06251657.0
(22) Date of filing: 28.03.2006
(51) Int. Cl.: H01S 3/038, H01S 3/225, C25B 11/04

(54) **Alumina tube**

(30) Priority: 29.03.2005 JP 2005096450
(71) Applicant: NGK INSULATORS, LTD., Nagoya-city, Aichi 467-8530 (JP)
(72) Inventor: Ohta, M. Legal Affairs and Intellectual Pty Dept., Nagoya City Aichi-ken 467-8530 (JP)
(74) Representative: Paget, Hugh Charles Edward

(57) **Abstract**

An excimer laser includes: an alumina tube which has a purity of 99.9% by weight or more, a density of 3.99 g/cm³ or more, an open porosity of less than 0.3%, and a dielectric strength voltage of 15 kV/mm or more and which includes a hollow portion; an inner electrode for corona discharge which is disposed in the hollowportion of the alumina tube; and an outer electrode for corona discharge which is disposed so as to contact an outer circumferential surface of the alumina tube.

## Description

### CROSS REFERENCE TO RELATED APPLICATION

This application is based upon and claims the benefit of priority from a Japanese Patent Application No.TOKUGAN 2005-096450, filed on March 29, 2005; the entire contents of which are incorporated herein by reference.

### BACKGROUND OF THE INVENTION

### 1. Field of the invention

The present invention relates to an alumina tube, and in particular, to an alumina tube used for a corona discharge device.

### 2. Description of the Related Art

Conventionally, there have been provided excimer lasers that excite atoms of a filler gas such as a rare gas or a mixed gas of the rare gas and a halogen gas to generate excimer molecules for laser oscillation. According to such excimer lasers, preionization is performed to assist the excitation.

One system of performing the preionization is to arrange spark pin electrodes, so that photons in a far ultraviolet range are generated (hereinafter, "spark preionization"). However, the spark preionization has problems in that it is difficult to perform uniform ionization to accomplish temporally and spatially uniform electronic density, and since high discharge current passes though the spark pin electrodes, the spark pin electrodes are eroded and a filler gas is contaminated. As a result, the filler gas must be exchanged.

In order to solve such problems, a system that performs the preionization by corona discharge (hereinafter, "corona preionization") has been developed. According to the corona preionization, as disclosed in Japanese Patent Application Laid-Open No. S63-227074, an electrode for corona discharge is disposed inside and outside of a tube made of a dielectric material, and discharge occurs via the dielectric material. As disclosed in Japanese Patent Application Laid-openNo. H10-56220, for example, alumina is used as the dielectric material.

### SUMMARY OF THE INVENTION

Even if commercial grade alumina (having a purity of 99.8% orless) isutilizedasadielectricmaterial, thedielectricstrength voltage and the corrosion resistance are not sufficient. Accordingly, it is difficult to apply high voltage to electrodes for rapid and high output laser oscillation. A filler gas which is filled in an excimer laser or the like may be contaminated. While the corona preionization accomplishes uniform ionization as compared to the spark preionization, sufficient uniformity is not obtained.

An object of the present invention is to provide an alumina tube that can prevent generation of dielectric breakdown and contamination of a filler gas, and accomplish uniform ionization with further improved resistivity and strength than the conventional material.

An alumina tube of the present invention has a purity of 99.9% by weight or more, a density of 3.99 g/cm³ or more, an open porosity of less than 0.3%, and a dielectric strength voltage (JIS C2110) of 15 kV/mm or more, and includes a hollow portion in which an inner electrode for corona discharge is disposed.

Since such alumina tube contains extremely few impurities and open pores, and has high density, it has a small number of origins of dielectric breakdown, thus serves as a uniform dielectric body, and arcing (abnormal electrical discharge) hardly occurs. The alumina tube has high dielectric strength voltage, and even if high voltage is applied to the inner electrode for corona discharge which is disposed in the hollow portion and an outer electrode for corona discharge which is disposed so as to contact an outer circumferential surface of the alumina tube, generation of dielectric breakdown is prevented. By using such alumina tube, uniform ionization is accomplished.

Since the alumina tube has high purity and contains extremely few impurities in its grain boundary phases, high corrosion resistance is accomplished. Further, the number of open pores that easily hold particle sources that contaminate the filler gas and that easily generate particles due to scraping of edge portions is very little. According to the alumina tube, contamination of the filler gas is prevented.

The alumina tube preferably has a volume resistivity value (JIS C2141) at room temperature of 4.0 x 10¹⁶ Ω·cm or more. The permittivity of the alumina tube is preferably 10.7 or more. Since the alumina tube has high resistance and permittivity, its dielectric strength voltage is increased, and even if high voltage is applied thereto, generation of dielectric breakdown is even further prevented. As the result of application of even higher voltage, the alumina tube increases the speed of ionization and accomplishes high speed ionization.

The alumina tube preferably has an average particle diameter of 3 to 10 µm, by which the alumina tube has high strength. Further, the number of the grain boundary phases that are easily corroded by a corrosive gas is reduced. Thus, the alumina tube has a higher corrosion resistance.

The alumina tube preferably has a four-point bending strength (JIS R1601) of 500 MPa or more. As a result, even an elongated alumina tube has high strength and its damage is prevented.

### BRIEF DESCRIPTION OF THE DRAWINGS

Exemplary embodiments of the invention will become more fully apparent from the following description and appended claims, taken in conjunction with the accompanying drawings. Understanding that these drawings depict only exemplary embodiments and are, therefore, not tobe considered limiting of the invention' s scope, the exemplary embodiments of the invention will be described with additional specificity and detail through use of the accompanying drawings in which:
Figure is a perspective view of a configuration of an excimer laser according to an embodiment of the present invention.

### DETAILED DESCRIPTION OF THE PREFERRED EMBODIMENTS

Various embodiments of the invention are now described with reference to the Figures. The embodiments of the present invention, as generally described and illustrated in the Figures herein, could be arranged and designed in a wide variety of different configurations. Thus, the following more detailed description of several exemplary embodiments of the present invention, as represented in the Figures, is not intended to limit the scope of the invention, as claimed, but is merely representative of the embodiments of the invention.

The word "exemplary" is used exclusively herein to mean "serving as an example, instance, or illustration." Any embodiment described herein as "exemplary" is not necessarily to be construed as preferred or advantageous over other embodiments. While the various aspects of the embodiments are presented in drawings, the drawings are not necessarily drawn to scale unless specifically indicated.

An excimer laser 10 shown in Figure is one of corona discharge devices that perform corona discharge as preionization. As shown in Figure, the excimer laser 10 includes a corona discharge treating unit 10a, an upper main electrode 3, a lower main electrode 4, a chamber 5, andapulsedpower supply 6. The corona discharge treating unit 10a includes an alumina tube 1, an inner electrode 2a, and an outer electrode 2b. Any devices that include the corona discharge treating unit 10a and perform corona discharge are categorized as the corona discharge device.

The corona discharge treating unit 10a and a pair of the upper main electrode 3 and the lower main electrode 4 are accommodated in the chamber 5. A halogen gas such as fluorine (F₂) and chlorine (Cl₂), a mixed gas of a rare gas such as krypton (Kr) , argon (Ar) , and xenon (Xe) and the halogen gas, or the like is filled in the chamber 5 as a filler gas. The upper main electrode 3 is provided in the chamber 5 so as to oppose the lower main electrode 4 in the vertical direction. The upper main electrode 3 and the lower main electrode 4 are connected to the pulsed power supply 6. According to Figure, the upper main electrode 3 is an anode, and the lower main electrode 4 is a cathode. The pulsed power supply 6 applies pulsed voltage to the upper main electrode 3 and the lower main electrode 4 so that filler gas atoms are excited and excimer molecules such as Kr₂*, Ar₂*, KrF*, ArF*, and XeCl* are generated, thereby performing laser oscillation.

To assist the laser oscillation, in the excimer laser 10, the corona discharge treating unit 10a performs corona discharge for preionization. As electrodes for the corona discharge, the inner electrode 2a which is disposed within the alumina tube 1 and the outer electrode 2b which is disposed so as to contact an outer circumferential surface of the alumina tube 1 are provided. The alumina tube 1 has a hollow portion 1b in which the inner electrode 2a for corona discharge is disposed. The inner electrode 2a is inserted into the hollow portion 1b and disposed therein. The inner electrode 2a and the outer electrode 2b are connected to the pulsed power supply 6. By applying pulsed voltage to the inner electrode 2a and the outer electrode 2b, the inner electrode 2a and the outer electrode 2b perform the corona discharge via the alumina tube 1.

The alumina tube 1 is made of an alumina sintered body having a purity of 99.9% by weight or more, a density of 3.99 g/cm³ or more, an open porosity of less than 0.3%, and a dielectric strength voltage (JIS C2110) of 15 kV/mm or more. Since extremely few impurities and open pores exist in the alumina tube 1 and it has high density, there are only a small number of origins of dielectric breakdown. As a result, the alumina tube 1 serves as a uniform dielectric body. Further, since a small number of open pores that serve as origins of arcing exist, arcing (abnormal electrical discharge) is hardly generated. Accordingly, the alumina tube 1 has high dielectric strength voltage, and generation of the dielectric breakdown is prevented even if high voltage is applied to the inner electrode 2a disposed in the hollow portion 1b and the outer electrode 2b disposed so as to contact the alumina tube 1.

For example, when the corona discharge treating unit 10a is used for the preionization of the excimer laser 10, high voltage can be applied to the inner electrode 2a and the outer electrode 2b. Thus, the speed of ionization is increased, thereby realizing a high speed ionization, and the excimer laser 10 realizes rapid and high output laser oscillation. By using the alumina tube 1, uniform ionization is accomplished. Particularly, the initial density of electrons in the chamber 5 is made to be extremely uniform.

Since the alumina tube 1 has high purity and extremely few impurities are contained in grain boundary phases, high corrosion resistance is realized. Further, the number of open pores that easily hold particle sources that contaminate the filler gas and that easily generate particles due to scraping of the edge portions is very little. According to the alumina tube 1, contamination of the filler gas is prevented.

The purity of the alumina tube 1 is preferably 99.95% by weight or more. More preferably, 500 ppm or less of impurity elements is contained in the alumina tube 1. The open porosity of the alumina tube 1 is preferably 0.1% or less. The dielectric strength voltage of the alumina tube 1 is preferably 18 kV/mm or more.

The alumina tube 1 preferably has a volume resistivity value (JIS C2141) at room temperature of 4.0 × 10¹⁶ Ω·cm or more. The alumina tube 1 preferably has a permittivity of 10.7 or more. As described above, since the alumina tube 1 has high resistivity value and permittivity, its dielectric strength voltage is increased and generation of dielectric breakdown is even further prevented even if high voltage is applied thereto. Since even higher voltage can be applied, the alumina tube 1 increases the speed of ionization, thereby realizing a high speed ionization. For example, when the corona discharge treating unit 10a is used for the preionization of the excimer laser 10, rapid preionization is realized, and the excimer laser 10 accomplishes rapid and high output laser oscillation.

The alumina tube 1 is preferably an alumina sintered body having an average particle diameter of 3 to 10 µm. As a result, the alumina tube 1 has high strength. Since the number of grain boundary phases easily corroded by a corrosive gas is reduced, the alumina tube 1 is made to have higher corrosion resistance.

The alumina tube 1 preferablyhas a four-point bending strength (JIS R1601) at room temperature of 500 MPa or more. As a result, even the elongated alumina tube 1 has high strength, thereby facilitating handleability and preventing damage during its transportation or the like.

The thickness of the alumina tube 1 is preferably uniform and the variation of the thickness is preferably 30% or less. As a result, the alumina tube 1 realizes more uniform ionization and generation of arcing is even further prevented.

The alumina tube 1 preferably has a tracking preventing groove 1a for preventing tracking at the side surfaces of its opposed ends. The alumina tube 1 may have a groove for preventing its rotation (hereinafter, "rotation preventing groove") at the side surface of its one end or the side surfaces of its opposed ends.

The above-described alumina tube 1 is produced, for example, as follows. Firstly, a binder, water, and a dispersing agent are added to a raw powder containing an alumina (Al₂O₃) powder and a sintering aid and are mixed together in order to prepare a slurry. An alumina powder having a purity of 99.9% by weight or more is preferably used. As a result, the alumina tube 1 with high purity and strength is obtained. More preferably, an alumina powder having a purity of 99.99% by weight or more is used.

If the alumina powder has a specific surface area of 3 to 10 m²/g, sintering proceeds appropriately and the alumina tube 1 with high strength and high density is obtained. The alumina powder preferably has an average particle diameter of 8 µm or less. As a result, the alumina tube 1 with high strength is obtained. More preferably, the average particle diameter is 3 to 7 µm.

The alumina powder is obtained by, for example, pyrolyzing aluminum ammonium nitrate. For example, crystals of aluminum ammonium nitrate salt are filled in a case made of high purity alumina and pyrolized with an electric furnace. Then, the temperature is increased to 1100 to 1300°C and the case is held for 30 minutes to 5 hours at temperatures in the range. As a result, the alumina powder is obtained.

For example, magnesia (MgO) is used as the sintering aid. Preferably, 0.1% by weight or less of the sintering aid is contained in the raw powder. As a result, the alumina tube 1 with high density that is made of uniform crystal particles is obtained. More preferably, the amount of the sintering aid is 0.05 to 0.08% by weight. This makes the grain size in the alumina tube more uniform resulting in higher toughness and strength. Besides, the addition of MgO improves the corrosion resistance of the alumina tube since the magnesium fluoride that is generated by a reaction between the magnesia and fluorine content gas introduced into the tube, has much higher sublimation point than aluminum fluoride that is generated by the reaction between the alumina and fluorine content gas. The addition of the magnesia also makes the electrical resistivity higher to the alumina tube.

Granules are obtained by granulating the resultant slurry by a spray granulating method. The resultant granules are molded in a tube shape by a molding method such as extrusion molding, metallic molding, or CIP (Cold Isostatic Pressing). The resultant tube-shaped molded body is degreased and sintered at 550 to 1700°C in an atmosphere of an inert gas such as a hydrogen gas or an argon gas by a sintering method such as pressureless sintering. More preferable calcinations temperature is 1600 to 1650°C. The temperature is preferably increased to the sintering temperature at a speed of 100 to 800 °C/hour.

The tracking preventing groove 1a is formed by processing the side surfaces of the resultant tube-shaped alumina sintered body at its opposed ends. The rotation preventing groove may be optionally formed at the side surface of one end or the side surfaces of the opposed ends of the alumina sintered body. In this way, the alumina tube 1 that is made of the alumina sintered body and has the hollow portion in which the inner electrode 2a serving as the electrode for corona discharge is disposed is obtained.

As described above, the excimer laser 10 that has the corona discharge treating unit 10a includes the alumina tube 1 that has a purity of 99.9% by weight or more, a density of 3.99 g/cm³ or more, an open porosity of less than 0.3%, and a dielectric strength voltage of 15 kV/mm or more and that includes the hollow portion, the inner electrode 2a which is disposed in the hollow portion 1b of the alumina tube 1, and the outer electrode 2b which is disposed so as to contact the outer circumferential surface of the alumina tube 1. Thus, dielectric breakdown of the alumina tube 1 and contamination of the filler gas are prevented, and uniform ionization is accomplished. Temporally and spatially uniform electronic density is realized, and the need for exchanging the filler gas is reduced.

The excimer laser 10 including the corona discharge treating unit 10a described above is utilized, for example, for lithography devices that perform laser transfer.

Although the present invention is explained in further detail according to an embodiment, the invention is not limited by the embodiment.

### (Manufacturing of Alumina Tube)

Water, a dispersing agent, and polyvinyl alcohol (PVA) and polyethylene glycol as a binder were added to a raw powder containing an alumina powder having a purity of 99.99% by weight, a specific surface area of 7 m²/g, and an average particle diameter of 7 µm and 0.07% by weight of magnesia as a sintering aid. The resultant mixture was mixed in a trommel, so as to prepare a slurry. The resultant slurry was spray-dried using a spray drier. As a result, granules having an average particle diameter of about 70 to 90 µm were prepared.

A tube-shaped molded body was made from the granules by CIP. The resultant molded body was degreased and sintered by pressureless sintering, so as to obtain a tube-shaped alumina sintered body. Specifically, the temperature of the molded body was increased at a rate of 100 °C/hour in a hydrogen atmosphere and then held at 1600°C for three hours. The tracking preventing groove was formed by processing at opposed ends of the resultant tube-shaped alumina sintered body. An alumina tube with an outer diameter of 15 mm, an inner diameter of 6 mm, and a length of 700 mm which included a hollow portion into which an inner electrode for corona discharge is inserted was obtained.

### (Evaluation Method)

The obtained alumina tube was evaluated with respect to the following points (1) to (8) . (1) Purity: The impurity content was determined by inductively-coupled plasma (ICP) emission spectrometry. The purity of the alumina tube was calculated by using the result of determination of the impurity content. (2) Density: The density was evaluated using pure water as a medium by the Archimedes' method. (3) Open Porosity: The open porosity was evaluated by using pure water as the medium by the Archimedes' method. (4) Dielectric Strength Voltage: The dielectric strength voltage was measured by a method according to JIS C2110. (5) Volume Resistivity Value: The volume resistivity value was measured at a room temperature (25°C) by a method according to JIS C2141. A voltage of 5000 V/mm was applied to the alumina tube. (6) Permittivity: The permittivity was measured at a room temperature (25°C) by a method according to JIS C2141. (7) Average Particle Diameter: The average particle diameter was measured by mirror polishing the surface of the sintered body and observing the resultant surface using an optical microscope at 400-foldmagnification. (8) Four-Point Bending Strength: The four-point bending strength was measured at a room temperature by a method according to JIS R1601.

### (Evaluation Results)

The obtained alumina tube had a purity of 99.9% by weight, a density of 3.99 g/cm³, an open porosity of 0.1%, and a dielectric strength voltage of 16 kV/mm. At the room temperature, the volume resistivity value was 5.0 × 10¹⁶ Ω·cm, and the permittivity was 11.0. As a result, the alumina tube had high dielectric strength voltage, and generation of dielectric breakdown was prevented even if high voltage was applied thereto. The alumina tube realized high speed ionization and performed uniform ionization. The alumina tube also realized high corrosion resistance and contamination of a filler gas was prevented. The average particle diameter was 7 µm, and the four-point bending strength was 500 MPa. The alumina tube had high strength in spite of its elongated shape and was subjected to handling and processing without any problems.

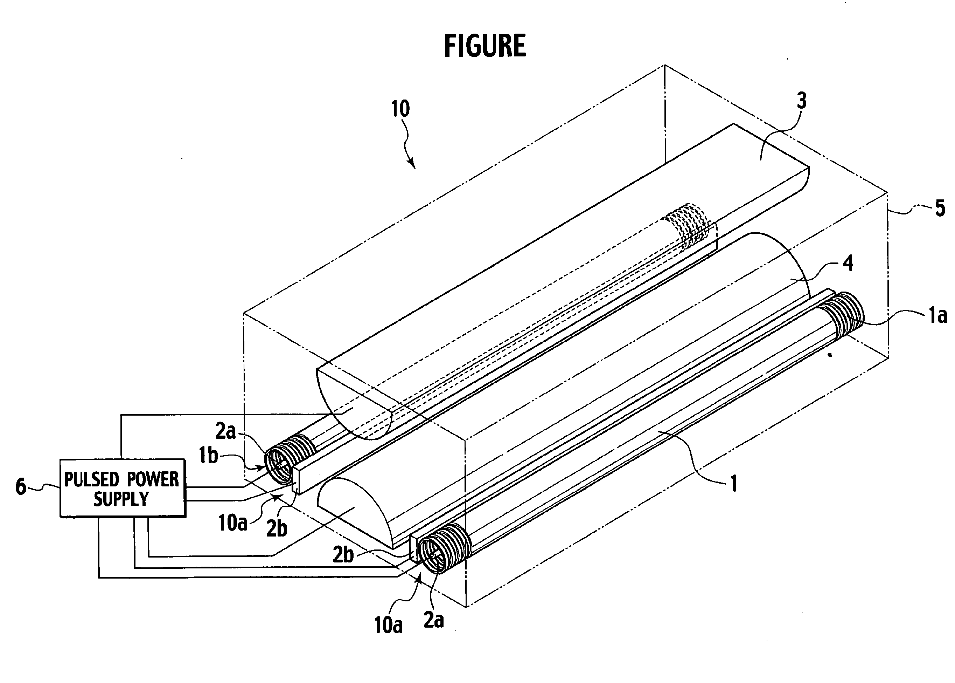

## Claims

1. An alumina tube (1) which has a purity of 99.9% by weight or more, a density of 3.99 g/cm³ or more, an open porosity of less than 0.3%, and a dielectric strength voltage of 15 kV/mm or more, and comprises a hollow portion (1b) in which an inner electrode (2a) for corona discharge is disposed.

2. The alumina tube (1) according to claim 1, wherein a volume resistivity value at room temperature is 4.0 × 10¹⁶ Ω·cm or more.

3. The alumina tube (1) according to claim 1, wherein a permittivity is 10.7 or more.

4. The alumina tube (1) according to claim 1, wherein an average particle diameter is 3 to 10 µm.

5. The alumina tube (1) according to claim 1, wherein a four-point bending strength is 500 MPa or more.
